# EUROPÄISCHE PATENTSCHRIFT

(11) **EP 0 941 600 B1**
(45) Veröffentlichungstag und Bekanntmachung des Hinweises auf die Patenterteilung: **03.12.2003**
(21) Anmeldenummer: 97924963.8
(22) Anmeldetag: 21.05.1997
(51) Int. Cl.: H04N 1/031, H04N 5/66

(54) **EINRICHTUNG ZUR EINGABE VON INFORMATIONEN**
A DEVICE FOR INPUTTING DATA
DISPOSITIF POUR ENTRER DES DONNEES

(30) Priorität: 29.05.1996 DE 19621362; 20.05.1997 DE 19720925
(43) Veröffentlichungstag der Anmeldung: 15.09.1999
(73) Patentinhaber: Deutsche Telekom AG, 53113 Bonn (DE)
(72) Erfinder: KOOPS, Hans, Wilfried, Peter, D-64372 Ober-Ramstadt (DE); KOOPS, Ulrich, H., M., D-64372 Ober-Ramstadt (DE)
(74) Vertreter: Borchert, Uwe Rudolf, Dipl.-Ing.
(86) Internationale Anmeldenummer: EP9702575
(87) Internationale Veröffentlichungsnummer: WO97046000

(56) Entgegenhaltungen:
- DE-A- 3 140 217
- DE-A- 3 643 576
- DE-A- 19 545 484
- US-A- 5 130 531

## Beschreibung

Die Erfindung betrifft eine Einrichtung zur Eingabe von Informationen.

Zur Eingabe von Informationen im Zusammenhang mit einem Bildschirm sind verschiedene Einrichtungen bekanntgeworden. So ist es beispielsweise bekannt, mit einem sogenannten Lichtgriffel auf einen Bildschirm zu zeigen. In der Spitze des Lichtgriffels ist ein Photodetektor angeordnet, der ein Ausgangssignal abgibt, wenn der Schreibstrahl des Bildschirms die vom Photodetektor erfaßte Fläche des Bildschirms überstreicht. Aus der zeitlichen Lage dieses Signals kann auf den Ort des Lichtgriffels geschlossen werden. Damit kann einerseits ein Bilddetail markiert und andererseits auch auf dem Bildschirm geschrieben werden.

Weitere Einrichtungen zur Eingabe von Informationen im Zusammenhang mit einem Bildschirm sind sogenannte Touch-Screen-Vorrichtungen, die druckempfindlich sind oder kapazitiv arbeiten. Derartige Vorrichtungen werden heute von Bauteilherstellern als Zusatz für Bildröhren und Flachbildschirme angeboten, beispielsweise im Katalog Elektronika, München 1995. Die Kapazitätsmessung, Druckoder Widerstandsänderung in der auf den Bildschirm aufgelegten matrix-adressierten Folienfläche wird dabei mit entsprechenden Rechenprogrammen identifiziert und den in Masken unterlegten Funktionen und Informationen oder Programmschritten zugewiesen.

Aufgabe der vorliegenden Erfindung ist es, eine Einrichtung zur Eingabe von Informationen anzugeben, die sowohl als autarke Einrichtung als auch als Zusatz für einen Bildschirm herstellbar ist.

Diese Aufgabe wird erfindungsgemäß dadurch gelöst, daß einem Raster aus lichtemittierenden Bildschirmelementen ein Raster aus Photodetektoren und ein Raster aus Linsen zugeordnet ist, daß die Linsen, die Bildschirmelemente und die Photodetektoren derart beabstandet sind, daß das emittierte Licht nicht fokussiert wird und daß das von mindestens einem der Bildschirmelemente emittierte und von einem sich der Einrichtung nähernden Gegenstand reflektierte Licht auf mindestens einen der Photodetektoren fokussiert wird, und daß Ausgangssignale der Photodetektoren einer Auswerteeinrichtung zuführbar sind zur Gewinnung von Informationen, welche der Photodetektoren reflektiertes Licht empfangen.

Die erfindungsgemäße Einrichtung ermöglicht die Eingabe von vorgegebenen Informationen durch Draufzeigen. Die Eingabe wird durch das gesteuerte Zusammenspiel der Bildwiedergabe-Funktion und der Bildaufnahme-Funktion in der erfindungsgemäßen Einrichtung erzielt. Die auswählbaren Informationen werden dabei über die Bildwiedergabe-Funktion des Bildschirmes programmiert ausgegeben und stehen als bestehendes Bild mit unterschiedlichen Helligkeiten und gegebenenfalls Farben auf dem Bildschirm. Mit dem Finger oder einem reflektierenden Gegenstand kann die Information ausgewählt werden, in dem man auf den Bereich, in dem sie dargestellt ist, deutet und dabei den Finger nahe an den Bildschirm bringt. Dabei ist die Verwendung eines lichtaussendenden Zeigers ebenfalls möglich.

Die Zahl der Photodetektoren und der lichtemittierenden Bildschirmelemente kann je nach Bedarf gewählt werden. Zur Darstellung von Bildern, an deren Auflösung ein Betrachter gewöhnt ist und die einen hohen Informationsgehalt aufweisen, können die von der Fernsehtechnik und von Computer-Bildschirmen gewohnten Zahlen von Bildschirmelementen verwendet werden - beispielsweise 600 × 800. Durch eine großflächige Ausführung der erfindungsgemäßen Einrichtung, beispielsweise im DIN-A4-Format, sind die Anforderungen an die lithographischen Verfahren und ihre Auflösung geringer und damit die Kosten der Herstellungsmaschinen relativ gering. Diese können auch in Abwandlung herkömmlicher Druckmaschinen realisiert werden.

Als emittierende Bildschirmelemente können die bei Bildröhren üblichen Phosphore verwendet werden, die von jeweils mit Abstand angeordneten und mit entsprechender Spannung beaufschlagten Elektronenquellen mit Elektronen bestrahlt werden. Die Elektronenquellen sind vorzugsweise Feldemitteranordnungen, die durch Korpuskularstrahl-Deposition hergestellt werden können.

Die Photodetektoren können aus nanokristallinem Verbundmaterial bestehen, das durch korpuskularstrahl-induzierte Deposition hergestellt wird und in der deutschen Patentanmeldung 196 21 175.1 beschrieben ist.

Vorzugsweise ist bei der erfindungsgemäßen Vorrichtung vorgesehen, daß jeweils einem lichtemittierenden Bildschirmelement ein Photodetektor zugeordnet ist. Es sind je nach Erfordernissen im einzelnen jedoch auch unterschiedliche Zahlen von Bildschirmelementen und Photodetektoren möglich.

Eine Verwendung der erfindungsgemäßen Einrichtung als "flache Kamera" ist gemäß einer Ausgestaltung der, Erfindung dadurch möglich, daß vor jeweils einem Photodetektor eine Sammellinse angeordnet ist.

Eine Weiterbildung der erfindungsgemäßen Einrichtung besteht darin, daß für jeweils von einer wiedergegebenen Maske gebildete Bildschirm-Bereiche die von den darin befindlichen Photodetektoren gemessene Intensität mit einer bekannten Hintergrundintensität verglichen wird und daß bei Überschreiten der Hintergrundintensität eine Annäherung des Gegenstandes festgestellt wird.

Bei dieser Weiterbildung wird die störende Wirkung von Streulicht vermieden, das einerseits von außen eindringt und andererseits durch die lichtemittierenden Bildschirmelemente selbst verursacht wird.

Die Weiterbildung kann vorzugsweise derart ausgebildet sein, daß die Hintergrundintensität während Zeiten, in denen sich der Gegenstand nicht der Einrichtung nähert, gemessen und in einem Speicher abgelegt wird, wobei in vorteilhafter Weise zum Vergleich und zur Feststellung ein Rechner mit Bildvergleichs-Routinen vorgesehen ist.

Eine besonders vorteilhafte Ausgestaltung der Weiterbildung der Erfindung besteht darin, daß ein Speicher für mindestens eine Maske vorgesehen ist, wobei vorzugsweise die Maske derart gestaltet ist, daß diejenigen Bereiche der lichtemittierenden Bildschirmelemente, in welchen eine Eingabe möglich sein soll, mindestens eine vorgegebene Lichtintensität abstrahlen. Damit ist sichergestellt, daß im Bereich derjenigen Photodetektoren, die eine Eingabe feststellen sollen, auch genügend Licht zum Reflektieren vorhanden ist.

Um jedoch zu vermeiden, daß das von den Bildschirmelementen emittierte Licht ebenfalls in die Photodetektoren.gelangt, und die Auswertung stört, kann bei der erfindungsgemäßen Einrichtung vorgesehen sein, daß die Photodetektoren gegenüber den lichtemittierenden Bildschirmelementen durch eine lichtundurchlässige Schicht abgeschirmt werden. Zusätzlich oder alternativ kann bei der erfindungsgemäßen Einrichtung auch vorgesehen sein, daß jeweils innerhalb der Bereiche diejenigen Bildschirmelemente, die sich in unmittelbarer Nähe von Photodetektoren befinden, aus deren Ausgangssignalen Informationen gewonnen werden, eine geringere oder keine Lichtintensität abstrahlen. Durch das sich von den Bildschirmelementen ungerichtet ausbreitende Licht ist trotzdem eine genügende Beleuchtung des Gegenstandes vor den Linsen vor den Photodetektoren sichergestellt.

Eine weitere Trennung zwischen Umgebungslicht und dem von den Bildschirmelementen für die Zwecke der Eingabe emittierten Licht kann gemäß einer anderen Ausgestaltung dadurch erfolgen, daß das von den Bildschirmelementen emittierte Licht moduliert ist und daß die Ausgangssignale der Photodetektoren über Filter geleitet werden, die für das Modulationssignal durchlässig sind.

Diese Maßnahme kann dadurch, daß für verschiedene Bereiche verschiedene Modulationssignale und verschiedene Filter vorgesehen sind, auch zur weiteren Ortsselektion verwendet werden. In diesem Zusammenhang wird noch darauf hingewiesen, daß die erfindungsgemäße Einrichtung nicht nur zur Auswertung eines einzelnen sich nähernden Gegenstandes, sondern auch zur Auswertung mehrerer Gegenstände in der Lage ist.

Ferner kann die erfindungsgemäße Einrichtung nicht nur zur Eingabe von Informationen, sondern auch zur Darstellung beliebiger Bilder und zur Aufnahme von Bildern von Gegenständen, die vor die erfindungsgemäße Einrichtung gebracht werden, verwendet werden. Bei einer anderen Weiterbildung der erfindungsgemäßen Einrichtung ist daher ein Betrieb in drei Phasen vorgesehen, wobei
- während einer ersten Phase die Bildschirmelemente zur Wiedergabe eines Bildes angesteuert werden,
- in einer zweiten Phase die Bildschirmelemente kein Licht emittieren, während die Ausgangssignale der Photodetektoren zur Bildaufnahme ausgewertet werden und
- in einer dritten Phase die Bildschirmelemente Licht emittieren und die Ausgangssignale der Photodetektoren zur Gewinnung der einzugebenden Informationen ausgewertet werden.

Wird die Kamera-Funktion nicht benötigt, so kann die erfindungsgemäße Einrichtung auch ohne weiteres mit zwei Phasen, nämlich der ersten und der dritten Phase betrieben werden.

Diese Weiterbildung der Erfindung ist vorzugsweise derart ausgelegt, daß die Wiederholfrequenz der drei bzw. zwei Phasen größer als die vom menschlichen Auge wahrnehmbare Flimmerfrequenz ist und/oder daß die Dauer der dritten Phase wesentlich geringer ist als die Dauer der ersten Phase. Damit wird eine flimmerfreie Wiedergabe des Bildes sichergestellt, die weitgehend frei von Störungen durch die während der Eingabe-Phase dargestellte Maske ist.

Die erfindungsgemäße Einrichtung kann einerseits als eigenständige Einheit durch die Ausbildung als plattenförmiger Körper, in welchem sowohl die lichtemittierenden Bildschirmelemente und auch die Photodetektoren angeordnet sind, ausgebildet sein. Es ist jedoch andererseits auch eine Nachrüstung von bestehenden Bildschirmen möglich durch die Ausbildung als Folie, welche die Photodetektoren und Leiterbahnen zur Ableitung der Ausgangssignale der Photodetektoren enthält und die auf einen Bildschirm aufbringbar ist, der die lichtemittierenden Bildschirmelemente enthält.

Ausführungsbeispiele der Erfindung sind in der Zeichnung anhand mehrerer Figuren dargestellt und in der nachfolgenden Beschreibung näher erläutert. Es zeigt:
- Fig. 1: einen Ausschnitt aus einer erfindungsgemäßen Einrichtung als Querschnitt,
- Fig. 2: ein Blockschaltbild einer erfindungsgemäßen Einrichtung mit einer beispielhaft dargestellten Ansteuer- und Auswerteschaltung,
- Fig. 3: ein mit Hilfe der erfindungsgemäßen Einrichtung wiedergegebenes Bild,
- Fig. 4: eine bei der erfindungsgemäßen Einrichtung kurzzeitig wiedergegebene Maske,
- Fig. 5: den zeitlichen Ablauf einzelner Phasen bei einer erfindungsgemäßen Einrichtung, die sowohl zur Bildwiedergabe als auch zur Bildaufnahme und als Eingabe-Einrichtung verwendet werden kann und
- Fig. 6: eine schematische Darstellung von Frequenzbereichen für einzelne Funktionen der erfindungsgemäßen Einrichtung im Falle eines anderen Ausführungsbeispiels.

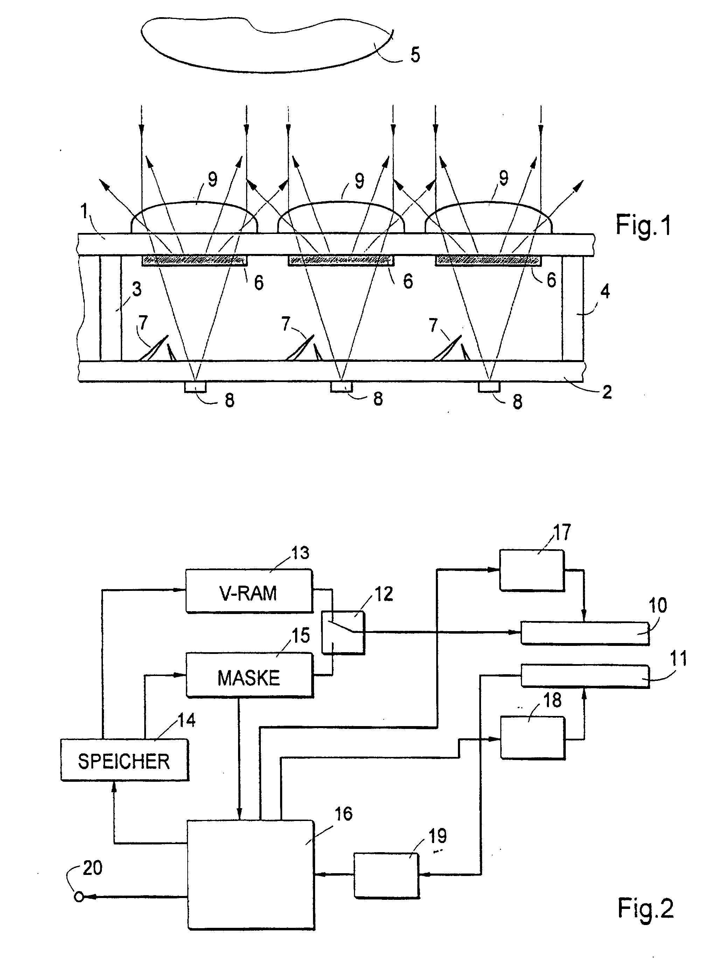

Bei dem Ausführungsbeispiel nach Fig. 1 werden zwei parallele Glasplatten 1, 2 durch Abstandshalter 3, 4 auf Abstand gehalten und schließen einen evakuierten Hohlraum ein. Die Innenseite der Glasplatte 1 ist mit Bildschirmelementen 6 versehen, die in an sich bekannter Weise unter Beschuß von Elektronen, die von Elektronenquellen 7 erzeugt werden, Licht emittieren. Bildwiedergabe-Einrichtungen dieser Art sind beispielsweise in DE 44 16 597 A1 beschrieben. Eine Erläuterung ist zum Verständnis der vorliegenden Erfindung im einzelnen daher nicht erforderlich.

Auf der Glasplatte 2 befinden sich Photodetektoren 8, die im wesentlichen in der Brennebene jeweils einer Linse 9 angeordnet sind. Hierüber findet sich ebenfalls eine Beschreibung in DE 195 45 484 A1. Die Sammellinsen bewirken, daß
Licht, das etwa aus Richtung der optischen Achse der Linse einfällt, auf den dazugehörigen Photodetektor 8 fällt. Bezüglich der Bildschirmelemente 6 wirkt die Linse jedoch nicht als Sammellinse, so daß das von den Bildschirmelementen durch geeignete Ansteuerung gebildete Bild in einem größeren Winkel sichtbar ist.

Die Intensität des von den Bildschirmelementen 6 emittierten Lichts nimmt schnell mit der Entfernung ab. Kommt jedoch ein Gegenstand 5 der erfindungsgemäßen Einrichtung nahe, so wird er bei entsprechender Ansteuerung der Bildschirmelemente 6 relativ hell beleuchtet und reflektiert Licht durch die auf ihn gerichteten Sammellinsen 9 zu den dahinterliegenden Photodetektoren 8.

Die Signale der Photodetektoren 8 können, wie bei anderen Bildsensoren üblich, zeilenweise ausgelesen und ausgewertet werden, so daß schließlich Signale zur Verfügung stehen, an welcher Stelle der gesamten erfindungsgemäßen Einrichtung sich ein Gegenstand nähert. Dabei können auch mehrere Gegenstände detektiert werden.

Um zu verhindern, daß das von den Bildschirmelementen in Richtung auf die Glasplatte 2 emittierte Licht ein Ansprechen der Photodetektoren 8 bewirkt, sind mehrere Maßnahmen möglich. So können beispielsweise die Bildschirmelemente in Richtung auf die Glasplatte 2 mit Hilfe einer lichtundurchlässigen Schicht optisch abgeschirmt werden, wobei durch einen geeigneten Versatz zwischen den Bildschirmelementen 6 einerseits und den Linsen 9 und den Photodetektoren 8 andererseits eine Belichtung der Photodetektoren 8 durch einfallendes Licht sichergestellt sein muß.

Eine andere Möglichkeit zur Beeinträchtigung der Auswertung durch von den Bildschirmelementen nach hinten abgestrahltes Licht besteht darin, diejenigen Bildschirmelemente, die vor einem oder mehreren Photodetektoren angeordnet sind, deren Signale ausgewertet werden sollen, nicht anzusteuern. Ein vor diese Photodetektoren gelangender Gegenstand wird wegen des großen Abstrahlwinkels der emittierenden benachbarten Bildschirmelemente auch ausreichend beleuchtet.

Schließlich ist die Kompensation des nach hinten emittierten Lichts gleichzeitig mit von außen einfallendem Licht, das nicht von einem in die Nähe gebrachten Gegenstand reflektiert wird, dadurch möglich, daß in einer Justierphase - d.h., wenn kein Gegenstand in der Nähe der erfindungsgemäßen Einrichtung ist - die Ausgangssignale der Photodetektoren gemessen und gespeichert werden. Zur Anzeige von sich nähernden Gegenständen ist dann lediglich ein Vergleich mit den gespeicherten Werten erforderlich.

Fig. 2 zeigt eine erfindungsgemäße Einrichtung mit einer schematischen Darstellung der Ansteuer- und Auswerteschaltungen. Dabei ist die erfindungsgemäße Einrichtung selbst in zwei Teile, nämlich in das Raster von lichtemittierenden Bildschirmelementen 10 und in ein Raster von Photodetektoren 11 aufgeteilt. Da diese beiden Teile als Bildwiedergabe- und als Wiederaufnahme-Einrichtung dienen können, werden sie im folgenden der Einfachheit halber als Bildschirm 10 und Kamera 11 bezeichnet.

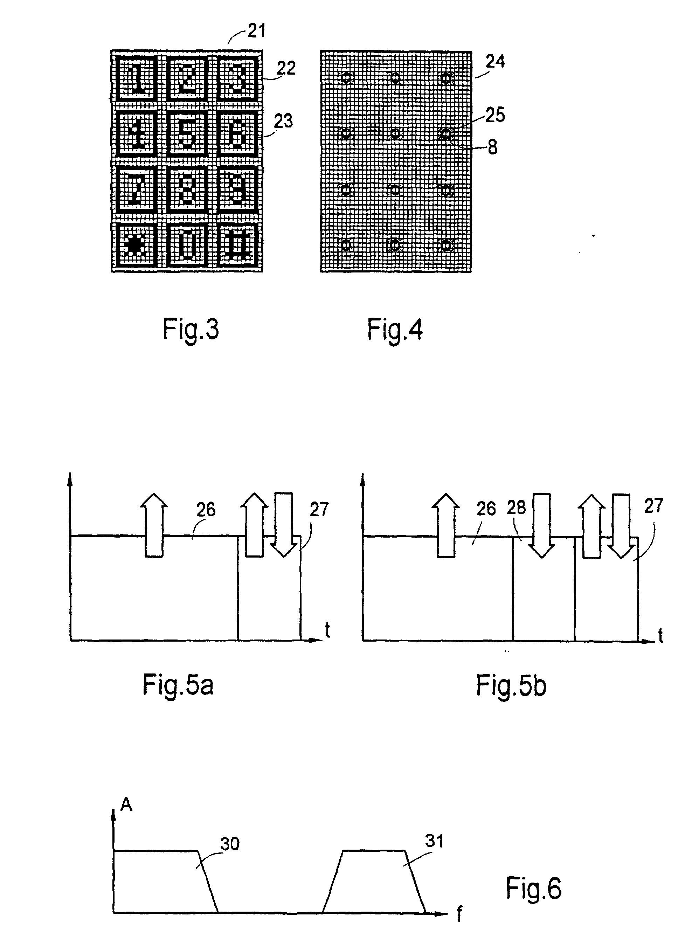

Bei der schematischen Darstellung der Ansteuer- und Auswerteschaltungen wird davon ausgegangen, daß es für viele Anwendungszwecke vorteilhaft ist, wenn sich das für einen Benutzer sichtbare Bild von einer Maske unterscheidet, die mit Hilfe der Bildschirmelemente nur dargestellt wird, um günstige optische Voraussetzungen für die Auswertung der Ausgangssignale der Photodetektoren zu haben. Deshalb sind zur Ansteuerung des Bildschirms 10 zwei Quellen vorgesehen, die über einen Umschalter 12 selektiv Zugriff auf den Bildschirm haben. Die eine Quelle ist ein Video-RAM 13, in dem ein darzustellendes Bild als Zeilenraster zwischengespeichert wird. Die Daten hierzu werden einem Speicher 14 entnommen. Das Bild kann beispielsweise, was schematisch in Fig. 3 dargestellt ist, eine Tastatur zeigen. Es sind jedoch auch beliebige andere Bildinhalte möglich. Während eines größten Teils der Bildperiode von beispielsweise 1/60 Sekunde wird das Bild, wie bei der Wiedergabe von Videosignalen üblich, geschrieben. Während dieser Zeit befindet sich der Umschalter 12 in der oberen Stellung.

Während der restlichen Zeit wird der Umschalter in die untere Stellung gebracht, so daß kurzzeitig eine in einem als andere Quelle wirkenden Speicher 15 abgelegte Maske auf dem Bildschirm 10 dargestellt wird. Im einfachsten Fall kann die Maske darin bestehen, daß alle Bildschirmelemente auf höchste Intensität gesteuert werden. Andere Masken sind jedoch auch anwendbar. Ein Beispiel dafür wird später im Zusammenhang mit Fig. 4 erläutert.

Die Maske kann auch durchaus zeitlich veränderlich sein, so daß die Intensität der Bildschirmelemente moduliert wird. Damit kann Fremdlichteinfluß kompensiert werden. Ist die Modulation ortsabhängig, kann eine zusätzliche Information über den Ort des sich nähernden Gegenstandes erzeugt werden.

Ein Prozessor 16 steuert den gesamten Ablauf bei der erfindungsgemäßen Einrichtung einschließlich je eines Rastergenerators 17, 18 für den Bildschirm 10 und die Kamera 11. Der Prozessor 16 wertet ferner die zuvor bei 19 beispielsweise durch Verstärkung und Filterung aufbereiteten Ausgangssignale der Kamera 11 aus, so daß an einem Ausgang 20 Daten zur Verfügung stehen, die besagen, an welchen Stellen sich ein oder mehrere Gegenstände der erfindungsgemäßen Einrichtung nähern.

Die Figuren 3 und 4 zeigen eine erfindungsgemäße Einrichtung bei ihrer Verwendung als Telefontastatur. Dazu werden dem Bildschirm 10 (Fig. 2) in der Bildwiedergabephase Signale zugeführt, die das in Fig. 3 dargestellte Bild 21 mit Tastenabbildungen 23 ergeben, wobei jeweils ein Quadrat ein Bildschirmelement 22 darstellt. Der Einfachheit halber wurden relativ große Bildschirmelemente 22 angenommen.

Während der Eingabephase wird die in Fig. 4 dargestellte Maske 24 auf dem Bildschirm 10 wiedergegeben. Dabei werden alle Bildschirmelemente bis auf diejenigen schraffiert dargestellten Bildschirmelemente 25, welche in unmittelbarer Umgebung der in Fig. 4 durch Kreise dargestellten Photodetektoren 8 liegen, aufgehellt. Die Eingabephase ist dabei so kurz, daß sie die Betrachtung des Bildes gemäß Fig. 3 nicht stört.

Fig. 5a zeigt den zeitlichen Ablauf der Bildwiedergabephase 26 und der Eingabephase 27, deren Dauer vergrößert dargestellt ist. Bei dem in Fig. 5b dargestellten Ablauf ist zusätzlich eine Bildaufnahmephase 28 vorgesehen, in welcher keine Ansteuerung des Bildschirms 10 erfolgt, so daß die Kamera 11 das sich vor ihr befindliche Bild aufnimmt. Die Pfeile in den Figuren 5a und 5b veranschaulichen das Licht, das von den Bildschirmelementen in der jeweiligen Phase emittiert wird, und das Licht, das von den Photodetektoren angezeigt wird.

Die in Fig. 6 dargestellte spektrale Verteilung kann gewählt werden, um die vom Fremdlicht - beispielsweise Leuchtstoffröhren - verursachten Anteile in den Ausgangssignalen der Photodetektoren zu unterdrücken. Dabei befinden sich in einem niedrigeren Frequenzbereich 30 die bei der Bildwiedergabe und Bildaufnahme verwendeten Bildfrequenzen, während zur Modulation des emittierten Lichtes während der Eingabephase Frequenzen im Bereich 31 benutzt werden.

## Patentansprüche

1. Einrichtung zur Eingabe von Informationen, **dadurch gekennzeichnet, daß** einem Raster aus lichtemittierenden Bildschirmelementen (6) ein Raster aus Photodetektoren (8) und ein Raster aus Linsen (9) zugeordnet ist, daß die Linsen (9), die Bildschirmelemente (6) und die Photodetektoren derart beabstandet sind, daß das emittierte Licht nicht fokussiert wird und daß das von mindestens einem der Bildschirmelemente (6) emittierte und von einem sich der Einrichtung nähernden Gegenstand reflektierte Licht auf mindestens einen der Photodetektoren (8) fokussiert wird, und daß Ausgangssignale der Photodetektoren (8) einer Auswerteeinrichtung (16) zuführbar sind zur Gewinnung von Informationen, welche der Photodetektoren (8) reflektiertes Licht empfangen.

2. Einrichtung nach Anspruch 1, **dadurch gekennzeichnet, daß** jeweils einem lichtemittierenden Bildschirmelement (6) ein Photodetektor (8) zugeordnet ist.

3. Einrichtung nach einem der Ansprüche 1 oder 2, **dadurch gekennzeichnet, daß** vor jeweils einem Photodetektor (8) eine Sammellinse angeordnet ist.

4. Einrichtung nach einem der vorhergehenden Ansprüche, **dadurch gekennzeichnet, daß** für jeweils von einer wiedergegebenen Maske (24) gebildete Bildschirm-Bereiche die von den darin befindlichen Photodetektoren (8) gemessene Intensität mit einer bekannten Hintergrundintensität verglichen wird und daß bei Überschreiten der Hintergrundintensität eine Annäherung des Gegenstandes (5) festgestellt wird.

5. Einrichtung nach Anspruch 4, **dadurch gekennzeichnet, daß** die Hintergrundintensität während Zeiten, in denen sich der Gegenstand (5) nicht der Einrichtung nähert, gemessen und in einem Speicher (14) abgelegt wird.

6. Einrichtung nach einem der Ansprüche 4 oder 5, **dadurch gekennzeichnet, daß** zum Vergleich und zur Feststellung ein Rechner (16) mit Bildvergleichs-Routinen vorgesehen ist.

7. Einrichtung nach einem der Ansprüche 4 bis 6, **dadurch gekennzeichnet, daß** ein Speicher (15) für mindestens eine Maske (24) vorgesehen ist.

8. Einrichtung nach einem der Ansprüche 5 bis 7, **dadurch gekennzeichnet, daß** die Maske (24) derart gestaltet ist, daß diejenigen Bereiche der lichtemittierenden Bildschirmelemente (6), in welchen eine Eingabe möglich sein soll, mindestens eine vorgegebene Lichtintensität abstrahlen.

9. Einrichtung nach einem der vorhergehenden Ansprüche, **dadurch gekennzeichnet, daß** die Photodetektoren (8) gegenüber den lichtemittierenden Bildschirmelementen (6) durch eine lichtundurchlässige Schicht abgeschirmt werden.

10. Einrichtung nach einem der Ansprüche 8 oder 9, **dadurch gekennzeichnet, daß** jeweils innerhalb der Bereiche diejenigen Bildschirmelemente (25), die sich in unmittelbarer Nähe von Photodetektoren (8) befinden, aus deren Ausgangssignalen Informationen gewonnen werden, eine geringere oder keine Lichtintensität abstrahlen.

11. Einrichtung nach einem der vorhergehenden Ansprüche, **dadurch gekennzeichnet, daß** das von den Bildschirmelementen (6) emittierte Licht moduliert ist und daß die Ausgangssignale der Photodetektoren (8) über Filter (19) geleitet werden, die für das Modulationssignal durchlässig sind.

12. Einrichtung nach Anspruch 11, **dadurch gekennzeichnet, daß** für verschiedene Bereiche verschiedene Modulationssignale und verschiedene Filter vorgesehen sind.

13. Einrichtung nach einem der vorhergehenden Ansprüche, **gekennzeichnet durch** den Betrieb in drei Phasen, wobei
- während einer ersten Phase die Bildschirmelemente (6) zur Wiedergabe eines Bildes (21) angesteuert werden,
- in einer zweiten Phase die Bildschirmelemente (6) kein Licht emittieren, während die Ausgangssignale der Photodetektoren (8) zur Bildaufnahme ausgewertet werden und
- in einer dritten Phase die Bildschirmelemente (6) Licht emittieren und die Ausgangssignale der Photodetektoren (8) zur Gewinnung der einzugebenden Informationen ausgewertet werden.

14. Einrichtung nach Anspruch 13, **dadurch gekennzeichnet, daß** die Wiederholfrequenz der drei Phasen größer als die vom menschlichen Auge wahrnehmbare Flimmerfrequenz ist.

15. Einrichtung nach einem der Ansprüche 13 oder 14, **dadurch gekennzeichnet, daß** die Dauer der dritten Phase wesentlich geringer ist als die Dauer der ersten Phase.

16. Einrichtung nach einem der vorhergehenden Ansprüche, **gekennzeichnet durch** die Ausbildung als plattenförmiger Körper (1, 2, 3, 4), in welchem sowohl die lichtemittierenden Bildschirmelemente (6) und auch die Photodetektoren (8) angeordnet sind.

17. Einrichtung nach einem der Ansprüche 1 bis 15, **gekennzeichnet durch** die Ausbildung als Folie, welche die Photodetektoren und Leiterbahnen zur Ableitung der Ausgangssignale der Photodetektoren enthält und die auf einen Bildschirm aufbringbar ist, der die lichtemittierenden Bildschirmelemente enthält.

## Claims

1. Means for inputting information, **characterized in that** a raster of light-emitting screen elements (6) is associated with a raster of photodetectors (8) and with a raster of lenses (9), **in that** the lenses (9), the screen elements (6) and the photodetectors are spaced apart such that the emitted light is not focused and the light emitted by at least one of the screen elements (6) and reflected by an object nearing the means is focused onto at least one of the photodetectors (8), and **in that** output signals from the photodetectors (8) can be supplied to an evaluation means (16) for obtaining information on which of the photodetectors (8) are receiving reflected light.

2. Means according to claim 1, **characterized in that** each light-emitting screen element (6) is associated with a photodetector (8).

3. Means according to any one of claim 1 or 2, **characterized in that** there is a converging lens positioned in front of each photodetector (8).

4. Means according to any one of the preceding claims, **characterized in that**, for screen regions each formed by a reproduced mask (24), the intensity measured by therein situated photodetectors (8) is compared with a known background intensity and **in that** the nearing of the object (5) is detected when the background intensity is exceeded.

5. Means according to claim 4, **characterized in that** the background intensity is measured during times in which the object (5) is not nearing the means and is stored in a memory (14).

6. Means according to any one of claim 4 or 5, **characterized in that** a computer (16) with image-comparison routines is provided for the purposes of comparison and detection.

7. Means according to any one of claims 4 to 6, **characterized in that** a memory (15) is provided for at least one mask (24).

8. Means according to any one of claims 5 to 7, **characterized in that** the mask (24) is of such design that those regions of the light-emitting screen elements (6) in which input is to be possible emit at least one predetermined light intensity.

9. Means according to any one of the preceding claims, **characterized in that** the photodetectors (8) are shielded in relation to the light-emitting screen elements (6) by a light-impermeable layer.

10. Means according to any one of claim 8 or 9, **characterized in that**, within each of the regions, a lower or no light intensity is emitted by those screen elements (25) situated in the immediate vicinity of photodetectors (8) from the output signals of which information is obtained.

11. Means according to any one of the preceding claims, **characterized in that** the light emitted by the screen elements (6) is modulated and **in that** the output signals from the photodetectors (8) are passed through filters (19) permeable to the modulation signal.

12. Means according to claim 11, **characterized in that** different modulation signals and different filters are provided for different regions.

13. Means according to any one of the preceding claims, **characterized by** operation in three phases, wherein
- during a first phase, the screen elements (6) are controlled for reproduction of an image (21);
- in a second phase, the screen elements (6) emit no light while the output signals from the photodetectors (8) are evaluated for image recording and
- in a third phase, the screen elements (6) emit light and the output signals from the photodetectors (8) are evaluated in order to obtain the information to be inputted.

14. Means according to claim 13, **characterized in that** the repetition frequency of the three phases is greater than the flickering frequency perceptible by the human eye.

15. Means according to any one of claim 13 or 14, **characterized in that** the duration of the third phase is substantially smaller than the duration of the first phase.

16. Means according to any one of the preceding claims, **characterized by** design in the form of a plate-shaped body (1, 2, 3, 4) containing both the light-emitting screen elements (6) and also the photodetectors (8).

17. Means according to any one of claims 1 to 15, **characterized by** design in the form of a foil containing the photodetectors and printed conductors for deriving the output signals from the photodetectors, said foil being able to be applied to a screen containing the light-emitting screen elements.

## Revendications

1. Dispositif pour l'entrée d'informations, **caractérisé en ce que** une grille de photodétecteurs (8) et une grille de lentilles (9) sont affectées à une grille d'éléments d'écran (6) émettant de la lumière, **en ce que** les lentilles (9), les éléments d'écran (6) et les photodétecteurs sont espacés de sorte que la lumière émise n'est pas concentrée et que la lumière émise par au moins un des éléments d'écran (6) et réfléchie par un objet s'approchant du dispositif est concentrée sur au moins un des photodétecteurs (8), et que les signaux de sortie des photodétecteurs (8) peuvent être amenés vers un dispositif d'analyse (16) pour l'acquisition d'informations, lesquels (8) reçoivent la lumière émise.

2. Dispositif selon revendication 1, **caractérisé en ce que** un photodétecteur (8) est affecté à un élément d'écran (6) émettant de la lumière.

3. Dispositif selon l'une quelconque des revendications 1 ou 2, **caractérisé en ce que** une lentille convergente est placée avant un photodétecteur (8).

4. Dispositif selon l'une quelconque des revendications précédentes, **caractérisé en ce que**, pour des champs d'écran formés par un masque (24) reproduit, l'intensité mesurée par les photodétecteurs (8) qui s'y trouvent est comparée à une intensité de fond connue et que, en cas de dépassement de l'intensité de fond, une approche de l'objet (5) est déterminée.

5. Dispositif selon revendication 4, **caractérisé en ce que** l'intensité de fond est mesurée et enregistrée en mémoire (14) lors de périodes au cours desquelles l'objet (5) ne s'approche pas du dispositif.

6. Dispositif selon l'une quelconque des revendications 4 ou 5, **caractérisé en ce que** un ordinateur (16) avec des routines de comparaison d'image est prévu pour la comparaison et la détermination.

7. Dispositif selon l'une quelconque des revendications 4 à 6, **caractérisé en ce que** une mémoire (15) est prévue pour au moins un masque (24).

8. Dispositif selon l'une quelconque des revendications 5 à 7, **caractérisé en ce que** le masque (24) est conçu de sorte que les champs des éléments d'écran (6) émettant de la lumière, dans lesquels une entrée doit être possible, diffusent au moins une intensité lumineuse prédéfinie.

9. Dispositif selon l'une quelconque des revendications précédentes, **caractérisé en ce que** les photodétecteurs (8) sont protégés des éléments d'écran (6) émettant de la lumière grâce à une couche opaque.

10. Dispositif selon l'une quelconque des revendications 8 ou 9, **caractérisé en ce que**, à l'intérieur des champs, les éléments d'écran (25) qui se trouvent à proximité immédiate de photodétecteurs (8), dont les signaux de sortie fournissent des informations, diffusent une faible intensité lumineuse ou aucune intensité lumineuse.

11. Dispositif selon l'une quelconque des revendications précédentes, **caractérisé en ce que** la lumière émise par les éléments d'écran (6) est modulée et que les signaux de sortie des photodétecteurs (8) sont transmis via des filtres (19) qui sont perméables pour le signal de modulation.

12. Dispositif selon revendication 11, **caractérisé en ce que** différents signaux de modulation et différents filtres sont prévus pour différents champs.

13. Dispositif selon l'une quelconque des revendications précédentes, **caractérisé par** un fonctionnement en trois phases qui sont les suivantes :
- lors de la première phase, les éléments d'écran (6) sont activés pour la reproduction d'une image (21 ),
- lors de la deuxième phase, les éléments d'écran (6) n'émettent aucune lumière pendant que les signaux de sortie des photodétecteurs (8) sont analysés pour la prise de vue et
- lors de la troisième phase, les éléments d'écran (6) émettent de la lumière et les signaux de sortie des photodétecteurs (8) sont analysés pour obtenir les informations à entrer.

14. Dispositif selon revendications 13, **caractérisé en ce que** la fréquence de répétition des trois phases est supérieure à la fréquence de scintillement perceptible par l'oeil humain.

15. Dispositif selon l'une quelconque des revendications 13 ou 14, **caractérisé en ce que** la durée de la troisième phase est bien plus courte que la durée de la première phase.

16. Dispositif selon l'une quelconque des revendications précédentes, **caractérisé par** la formation d'un corps rectangulaire (1, 2, 3, 4) dans lequel sont placés les éléments d'écran (6) émettant de la lumière tout comme les photodétecteurs (8).

17. Dispositif selon l'une quelconque des revendications 1 à 15, **caractérisé par** la formation d'une feuille qui renferme les photodétecteurs et les circuits conducteurs pour la dérivation des signaux de sortie et qui est applicable à un écran qui renferme les éléments d'écran émettant de la lumière.
